Europäisches Patentamt

European Patent Office

Office européen des brevets

(19)

(11) Numéro de publication: **0 090 716**
**B1**

(12) # FASCICULE DE BREVET EUROPEEN

(45) Date de publication du fascicule du brevet:
**26.02.86**

(51) Int. Cl.⁴: **D 06 F 37/30,** H 02 H 7/085,
H 02 H 3/06

(21) Numéro de dépôt: **83400576.1**

(22) Date de dépôt: **18.03.83**

(54) **Lave-linge à moteur d'entraînement du tambour de puissance réduite.**

(30) Priorité: **26.03.82 FR 8205257**
**30.12.82 FR 8222068**

(43) Date de publication de la demande:
**05.10.83 Bulletin 83/40**

(45) Mention de la délivrance du brevet:
**26.02.86 Bulletin 86/9**

(84) Etats contractants désignés:
**CH DE GB IT LI NL SE**

(56) Documents cités:
**EP - A - 0 056 437**
**DE - A - 1 410 174**
**DE - A - 1 610 132**
**FR - A - 1 230 763**
**FR - A - 2 162 500**
**FR - A - 2 311 883**
**FR - A - 2 339 979**
**FR - A - 2 454 625**
**FR - A - 2 489 384**
**FR - A - 2 492 608**
**US - A - 3 660 718**
**US - A - 4 235 085**

(73) Titulaire: **ESSWEIN S.A., 67, quai Paul-Doumer,**
**F-92400 Courbevoie (FR)**

(72) Inventeur: **Didier, Laurent, THOMSON-CSF SCPI 173, bld**
**Haussmann, F-75379 Paris Cedex 08 (FR)**
Inventeur: **Geay, Jean-Claude, THOMSON-CSF**
**SCPI 173, bld Haussmann, F-75379 Paris Cedex 08 (FR)**

(74) Mandataire: **Grynwald, Albert et al, THOMSON-CSF**
**SCPI 173, Bld Haussmann, F-75379 Paris Cedex 08 (FR)**

LIBER, STOCKHOLM 1986

## Description

L'invention est relative à un lave-linge à tambour tournant entrainé par un moteur électrique.

Le couple résistant opposé par le tambour et sont contenu au moteur électrique d'entraine-ment peut prendre des valeurs très variables qui dépendent notamment de la répartition et de la nature du linge dans la tambour. Les conditions les plus défavorables, c'est-à-dire le couple résistant le plus élevé, apparaissent pour des charges de volume faible et de grande densité telles que des serviettes-éponges qui accumulent beaucoup d'eau et qui ne sont pas réparties de façon régulière dans le tambour.

Le moteur d'entrainement est habituellement dimensionné pour s'opposer aux couples résistants les plus importants sans que ses enroulements subissent un échauffement prohibitif.

L'invention permet d'entrainer le tambour à l'aide d'un moteur de puissance inférieure et donc meilleur marché, le fonctionnement restant satisfaisant pour toutes les charges de linge et l'échauffement des enroulements du moteur restant malgré tout limité.

A cet effet, selon l'invention, on prévoit un moyen pour diminuer l'énergie de brassage du linge, à savoir le nombre de rotations du tambour en un temps déterminé, quand le couple réstant s'opposant au moteur augmente.

De cette manière la quantité de cuivre utilisé pour constituer les enroulements du moteur peut être réduite à un minimum.

Il est certes déjà connu, par le brevet US 4 235 085, que l'augmentation de la charge de linge dans le tambour provoque une diminution du nombre de rotations de ce tambour par unité de temps; mais cette propriété n'est pas utilisée dans le document antérieur pour minimiser le dimensionnement du moteur; de plus l'énergie de brassage est augmentée car ce brevet US mentionne qu'on augmente le temps de lavage quand on constate une diminution du nombre de rotations par unité de temps.

Dans une réalisation, pour faire varier l'énergie de brassage, on modifie le temps d'arrêt du tambour entre deux rotations au cours d'une phase de lavage.

Pour faire varier l'énergie de brassage on peut également modifier le temps de rotation du tambour entre deux périodes de repos.

Dans le cas le plus simple l'énergie de brassage ne prend que deux valeurs distinctes. Une première valeur correspond aux charges normales de linge et une seconde valeur, inférieure à la première, à une charge anormale, c'est-à-dire un couple résistant élevé. Mais l'énergie de brassage peut également varier de façon continue en fonction du couple résistant, par exemple de façon inversement proportionnelle à ce couple.

Pour la détection des variations du couple résistant on fait appel, par exemple, aux variations de l'intensité du courant électrique traversant le moteur. Dans ce cas ou peut prévoit un moyen pour arrêter le moteur quand l'intensité du courant électrique traversant ce dernier dépasse une valeur limite pendant un temps prohibitif.

Pour la mesure de l'intensité du courant traversant le moteur on prévoit, par exemple, une résistance en série avec ce dernier, la tension aux bornes de cette résistance représentant l'intensité du courant traversant le moteur. Dans une réalisation, dans laquelle on prévoit ledit moyen pour arrêter le moteur quand l'intensité du courant dépasse une valeur limite pendant un temps prohibitif, cette tension est comparée à une tension représentant cette valeur limite et on charge on condensateur lors des périodes de dépassement de cette valeur limite; le moteur est alors arrêté quand la charge du condensateur atteint une autre valeur limite. Dans ce cas, pour un fonctionnement satisfaisant, il est préférable de n'autoriser un nouveau démarrage du moteur que lorsque la charge du condensateur est redescendue à une valeur seuil inférieure à la valeur limite.

L'invention vise, selon un autre aspect, un lave-linge dans lequel le moteur est commandé de façon telle que l'énergie de brassage peut prendre deux valeurs, l'une, la plus faible, intervenant notamment lors du chauffage de l'eau de lavage et l'autre, plus importante, lorsque l'eau de lavage a atteint la température désirée, et les moyens de modification de l'énergie de brassage en fonction du couple résistant sont tels qu'ils n'interviennent que lorsque cette dernière a la valeur la plus élevée.

D'autres caractéristiques et avantages de l'invention apparaîtront avec la description de certains de des modes de réalisation, celle-ci étant effectuée en se référant aux dessins ci-annexés sur lesquels:

— la figure 1 est un schéma simplifié d'un moteur, de son circuit d'alimentation et de son circuit de commande faisant partie d'un lave-linge selon l'invention,
— la figure 2 est un schéma illustrant le fonctionnement du dispositif de la figure 1,
— la figure 3 est un organigramme pour un microprocesseur du dispositif de la figure 1,
— la figure 4 est un schéma d'un dispositif de protection de moteur selon l'invention, et
— les figures $5_a$ à $5_d$ sont des diagrammes illustrant le fonctionnement du schéma de la figure 4.

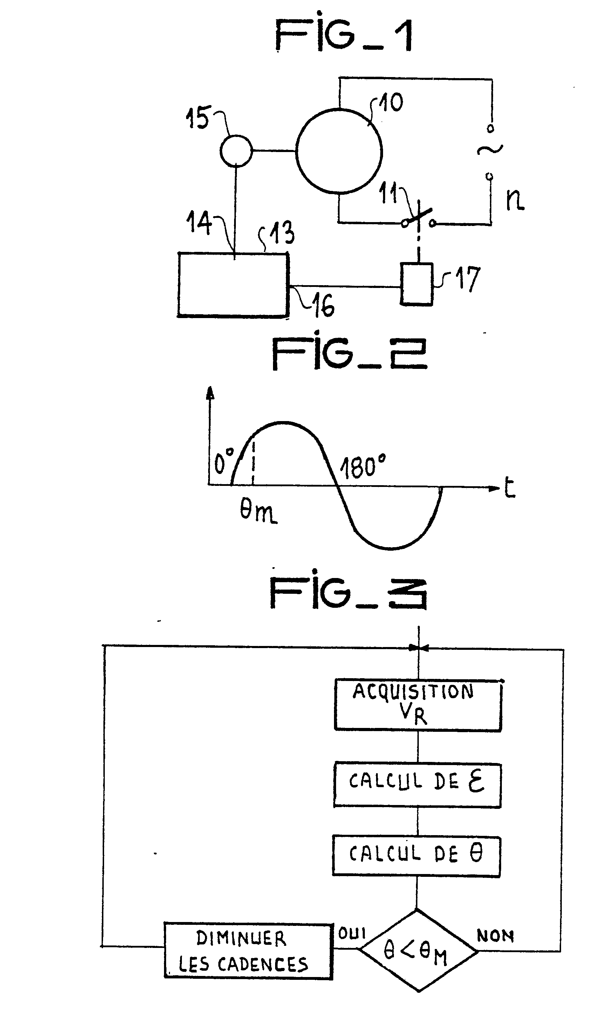

Dans l'exemple de la figure 1 le lave-linge comprend, pour l'entrainement du tambour, un moteur électrique 10 alimenté en courant alternatif (figure 2) et la vitesse de ce moteur est modifiable en faisant varier la puissance qui lui est fournie. A cet effet on prévoit une alimentation à découpage, c'est-à-dire un interrupteur 11, tel qu'un triac, en série avec un conducteur 12 d'alimentation de ce moteur, et un circuit de commande de cet interrupteur de façon qu'à chaque alternance du courant alternatif cet interrupteur 11 ne soit fermé que pendant le temps suffisant pour obtenir la puissance ou la vitesse désirée. En variante le moteur est alimenté en courant continu.

La vitesse du moteur est asservie à une consigne fournie par un programmateur. Cette consigne dépend de l'opération effectuée par la machine: lavage, rinçage, défoulage, essorage, remplissage en eau.

Dans l'exemple la consigne est en mémoire d'un microprocesseur 13 présentant une entrée 14 sur laquelle est appliqué le signal de sortie d'une génératrice tachymétrique 15 entrainée par le moteur 10. Ce microprocesseur 13 présente également une sortie 16 destinée à commander l'interrupter 11 par l'intermédiaire d'un circuit interface 17.

Le microprocesseur est programmé pour calculer le signal d'erreur ε qui est égal à la différence entre la vitesse réelle du moteur et sa vitesse de consigne. Le microprocesseur transforme le signal ε en un angle d'allumage Θ, compris entre 0 et 180° (figure 2) du triac 11. Un angle Θ égal à 0° correspond à une conduction du triac 11 pendant la totalité de la demi-alternance correspondante, c'est-à-dire l'alimentation du moteur 10 à pleine puissance, tandis que pour un angle de 180° le triac reste constamment ouvert, c'est-à-dire que le moteur 10 n'est pas alimenté et reste à l'arrêt.

En d'autres termes un petit angle d'allumage correspond à une puissance importante fournie au moteur.

Le montage est tel que la qualité de la régulation n'est pas trop importante afin que le signal d'erreur n'ait pas une valeur trop .petite.

Ce signal d'erreur est une fonction, le plus souvent directe, du couple résistant s'opposant au moteur. Plus le couple résistant est grand, plus le signal d'erreur ε est important. Il en résulte que plus le couple résistant est important plus l'angle d'allumage Θ est faible car, pour s'opposer à une couple résistant de grande valeur, il faut apporter une énergie importante.

L'angle Θ constitue donc une mesure du couple résistant qui est utilisée pour faire varier l'énergie de brassage du linge, notamment lors des périodes de lavage.

Dans l'exemple si l'angle d'allumage Θ est supérieur à une valeur minimale Θ$_m$ égale à 60° le tambour tourne pendant cinq secondes dans un sens, s'arrête pendant dix secondes puis tourne de nouveau, mais dans l'autre sens, pendant une période de cinq secondes et ainsi de suite.

Par contre, si l'angle d'allumage Θ est inférieur à la valeur minimale de 60°, c'est-à-dire que la puissance demandée au moteur est importante, ce qui signifie un fort couple résistant, les périodes d'arrêt sont allongées: elles sont alors de vingt secondes, les périodes de rotation dans un sens ou dans l'autre s'effectuant toujours pendant une durée de cinq secondes. Ainsi en cas de charge normale de linge, c'est-à-dire de couple résistant de valeur modérée, la puissance fournie au moteur est limitée, ce qui limite d'autant l'échauffement de ses enroulements. Par contre lorsque la charge de linge est anormale le couple résistant est élevé et la puissance fournie est alors important ce qui entraine un échauffement important des enroulements. L'allongement du temps d'arrêt permet alors aux enroulements de se refroidir.

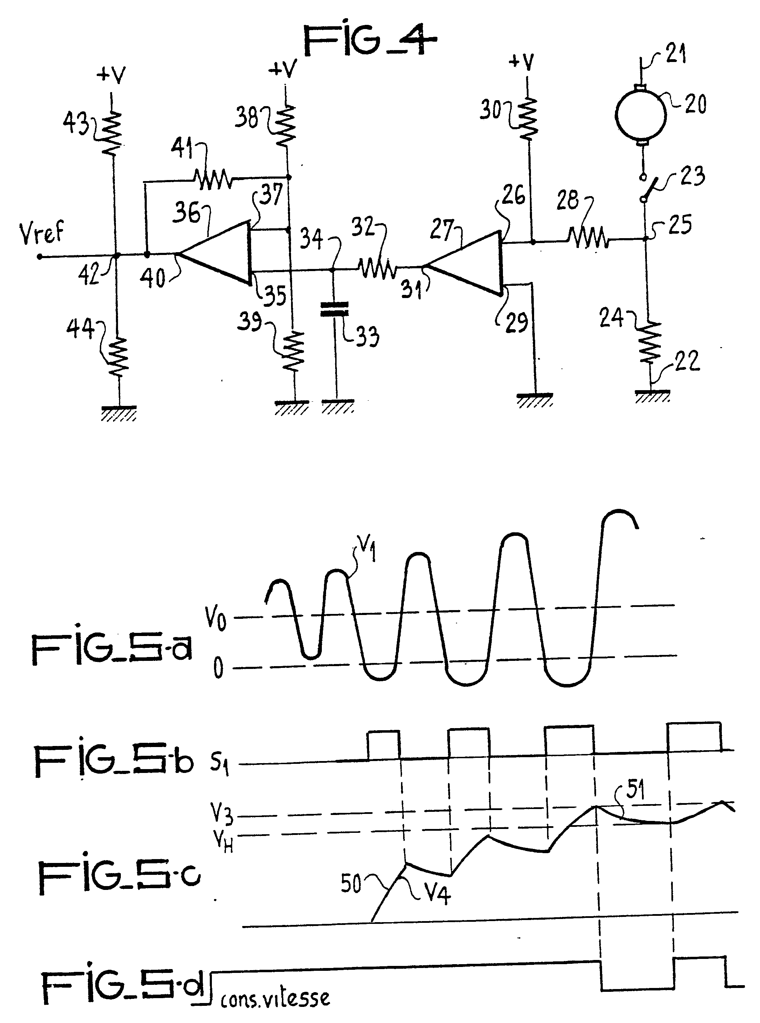

La figure 3, qui fait partie intégrante de la présente description, est un organigramme montrant comment est programmé le microprocesseur 13 pour modifier le temps d'arrêt du tambour entre deux rotations. Sur cet organigramme, de façon classique, à un rectangle correspond une opération à effectuer tandis qu'un losange correspond à une comparaison.

En variante si on constate que le couple résistant dépasse la valeur limite, on diminue le temps de rotation du tambour par exemple de cinq secondes à trois secondes tandis que le temps d'arrêt de dix secondes entre deux rotations reste inchangé.

Selon une autre disposition de l'invention si le couple résistant reste prohibitif pendant un temps déterminé et si, en même temps, la génératrice tachymétrique 15 ne fournit pas de signal, c'est-à-dire que le moteur est arrêté, l'alimentation dudit moteur est interrompue. Dans l'exemple on coupe l'alimentation, c'est-à-dire qu'on maintient constamment ouvert l'interrupteur 11, si pendant cinq alternances du signal alternatif d'alimentation il a été constaté, par le microprocesseur 13, que l'angle d'allumage est resté inférieur à 60° et si simultanément l'information de vitesse (représentée par le signal sur l'entrée 14) a disparu. Une telle sécurité, réalisée par une programmation du microprocesseur, est plus simple et plus sûre que celle utilisée habituellement qui consiste à détecter la température des enroulements du moteur et à couper l'alimentation de ce moteur en cas d'échauffement excessif qui risquerait de le détruire.

On se réfère maintenant aux figures 4 et 5$_a$ à 5$_d$.

Dans cet exemple le moteur 20 est un moteur électrique alimenté en courant alternatif, par exemple un moteur universel ou un monteur asynchrone monophasé. Cette alimentation s'effectue entre une phase 21 et le neutre 22 à la masse. Un interrupteur commandé 23 tel qu'un triac est en série avec le moteur 20. La commande de cet interrupteur est effectuée à l'aide d'un circuit (non représenté) de régulation qui asservit les durées de fermeture de cet interrupteur 23 à la vitesse désirée (ou vitesse de consigne) pour le moteur.

Une résistance 24, dite de mesure, est en série avec le moteur 20 et l'interrupteur 23. Dans l'exemple cette résistance 24 est entre le triac 23 et la masse 22.

La borne commune 25 au triac 23 et à la résistance 24 est reliée à la première entrée 26 d'un comparateur 27 par l'intermédiaire d'une résistance 28. La seconde entrée 29 du comparateur 27 est reliée à I masse. La première entrée 26 du comparateur 27 est également connectée à la borne positive d'une source par l'intermédiaire d'un résistance 30. Le potentiel de ladite borne est +V.

La sortie 31 du comparateur 27 est reliée à la masse par l'intermédiaire d'une résistance 32 et d'un condensateur 33. La borne commune 34 à la résistance 32 et au condensateur 33 est connectée à la seconde entrée 35 d'un comparateur 36. La première entrée 37 de ce comparateur 36 est reliée, d'une part, à une borne de potentiel +V par l'intermédiaire d'une résistance 38 et, d'autre part, à la masse à travers une résistance 39. Cette entrée 37 est également connectée à la sortie 40 du comparateur 36 par l'intermédiaire d'une résistance 41 de grande valeur.

La sortie 40 du comparateur 36 est reliée à une borne 42 connectée, d'une part, au potentiel +V par une résistance 43 et, d'autre part, à la masse par une résistance 44. Cette borne 42 peut être également reliée au programmateur de la machine fournissant les signaux de commande au moteur. Le potentiel de cette borne 42 est utilisé comme signal de consigne ou de référence ($V_{Ref}$) pour le circuit de commande du triac 23.

Le fonctionnement du dispositif de la figure 4 apparaîtra avec la description ci-dessous faite en relation avec les figures $5_a$ à $5_d$.

Le courant alternatif d'alimentation du moteur 20 a une intensité moyenne nulle. Par contre le potentiel moyen appliqué sur l'entrée 26 du comparateur 27 n'est pas nulle car le potentiel $V_1$ de cette borne est la somme, d'une part, de la tension aux bornes de la résistance 24 (proportionnelle à l'intensité du courant) et, d'autre part, d'une tension positive $V_0$ qui dépend de +V et des valeurs des résistances 24, 28 et 30, respectivement R, $R_1$ et $R_2$.

Le potentiel $V_0$ est choisi à une valeur telle que le potentiel $V_1$ de l'entrée 26 devient négatif (figure $5_a$) quand le couple résistant opposé par le moteur dépasse une valeur limite, c'est-à-dire quand l'intensité du courant dans ce moteur dépasse une valeur limite.

Le potentiel $S_1$ (figure $5_b$) de la sortie 31 du comparateur 27 est nul quand le potentiel $V_i$ est positif. Par contre ce potentiel $S_1$ est positif quand le potentiel $V_1$ est négatif.

Ainsi le condensateur 33 se charge quand le potentiel $V_1$ est négatif, c'est-à-dire lorsque le couple résistant opposé par la charge au moteur est prohibitif.

La courbe 50 de la figure $5_c$ représente les variations du potentiel $V_4$ sur l'entrée 35 du comparateur 36 c'est-à-dire les variations de la charge du condensateur 33.

Le diagramme de la figure $5_d$ représente les variations du potentiel de la borne 42 constituant un signal de consigne de la vitesse du moteur.

Le temps de charge du condensateur 33 augmente avec l'intensité du courant traversant le moteur 20 comme la montre la figure $5_a$.

Quand le potentiel $V_4$ de la borne 35 est inférieur au potentiel $V_3$ déterminé par le potentiel V et la valeur, respectivement $R_4$ et $R_5$, des résistances 39 et 38, le signal de sortie $S_2$ du comparateur 36 n'a pas d'influence sur le potentiel de la borne 42. Ce potentiel est alors essentiellement déterminé par le programmateur, la valeur V et les valeurs $R_6$, $R_7$ des résistances 43, 44. Le signal de consigne pour le circuit de commande de l'interrupteur 23 est ainsi soit un signal nul (imposé par le programmateur) soit le signal $V_{Ref}$ imposé par le pont diviseur à résistances 43, 44.

Par contre quand le potentiel $V_4$ sur la borne 35 atteint le potentiel sur la borne 37, alors égal à $V_3$, le signal de sortie $S_2$ est nul, la borne 40 étant connectée à la masse dans cette condition. Il en résulte que le potentiel de la borne 42 est également nul et qu'ainsi le signal de consigne de vitesse du moteur est nul. Celui-ci s'arrête donc.

Dans cette condition, c'est-à-dire avec le signal $S_2$ nul, le potentiel sur la borne 37 n'est plus le signal $V_3$ fonction des seules résistances $R_4$ et $R_5$ mais un signal $V_H$ qui dépend de la résistance $R_5$, de la résistance $R_4$ et de la valeur $R_8$ de la résistance 41 alors en parallèle sur la résistance 39 de valeur $R_4$. Ce potentiel $V_H$ est légèrement inférieur au potentiel $V_3$.

Le moteur 20 étant à l'arrêt, le courant le traversant est nul et le condensateur 33 ne se charge pas mais, au contraire, se décharge. La variation du potentiel $V_4$ est alors représentée par la portion de courbe 51 sur la figure $5_c$. Ainsi la sortie 40 du comparateur 36 ne change d'état que lorsque le potentiel $V_4$ est redescendu à la valeur $V_H$. Dans ces conditions, si le couple résistant est toujours prohibitif le condensateur 33 recommence à se charger.

Le temps d'arrêt imposé au moteur lorsque le courant le traversant a une intensité excessive pendant un temps prohibitif est pratiquement constant: c'est le temps que prend le condensateur 33 pour se décharger de la tension $V_3$ à la tension $V_H$.

Dans une réalisation le programmateur impose, lors du chauffage de l'eau de lavage, une rotation pendant trois secondes suivie par un temps d'arrêt de douze secondes et lorsque l'eau a atteint la température désirée l'énergie de brassage est plus grande: le moteur tourne pendant des périodes de neuf secondes séparées par des temps d'arrêt de six secondes. Dans cette réalisation on choisit le potentiel $V_3$, la valeur $R_3$ de la résistance 32 et la capacité C du condensateur 33 de manière telle que le signal $S_2$ en sortie 40 du comparateur 46 ne puisse atteindre la valeur nulle pour les faibles énergies de brassage et pour que ce signal ne puisse atteindre la valeur zéro qu'au plus une seule fois pour la plus forte énergie de brassage. En d'autres termes au cours d'une période comprenant un arrêt suivi d'une rotation le moteur n'est arrêté qu'au plus une seule fois, pendant un temps constant et quand l'énergie de brassage a la plus forte valeur.

La résistance 28 et/ou la résistance 30 peut être ajustable pour régler la valeur limite de l'intensité du courant traversant le moteur 20 au-delà de laquelle le condensateur 33 peut se charger.

## Revendications

1. Procédé pour minimiser le dimensionnement du moteur électrique d'entrainement du tambour d'un lave-linge, caractérisé en ce qu'on diminue l'énergie de brassage du linge quand le couple résistant s'opposant au moteur (10) augmente.

2. Procédé selon la revendication 1, caractérisé en ce que le nombre de tours du tambour pendant un temps donné diminue quand le couple résistant augmente.

3. Procédé selon la revendication 2, caractérisé en ce que le tambour tourne pendant des périodes de durée constante séparées par des périodes d'arrêt de durée varant dans le même sens que le couple résistant.

4. Procédé selon la revendication 2, caractérisé en ce que le tambour tourne pendant des périodes de durée variant en sens contraire des variations du couple résistant, périodes qui sont séparées par des arrêts de durée constante.

5. Procédé selon l'une quelconque des revendications 2 à 4, caractérisé en ce que l'énergie de brassage peut prendre deux valeurs distinctes, la plus grande correspondant à un couple résistant inférieur à une valeur limite et la plus petite correspondant à un couple résistant supérieur à la valeur limite.

6. Procédé selon l'une quelconque des revendications précédentes pour un lave-linge comprenant un circuit de régulation (13, 15, 17, 11) pour asservir la vitesse du moteur (10) d'entrainement du tambour à une consigne fournie par un programmateur, caractérisé en ce qu'un interrupteur (11) étant en série avec l'alimentation (12) du moteur (10), et un moyen de commande permettant de transformer les valeurs de signal d'erreur (ε) en valeurs de durée de conduction de l'interrupteur (11) au cours d'une période donnée, on modifie l'énergie de brassage en fonction de ladite durée de conduction de l'interrupteur (11).

7. Procédé selon la revendication 6, caractérisé en ce qu'un microprocesseur (13) calcule le signal d'erreur (ε) et la durée de conduction et modifie l'énergie de brassage en fonction du couple résistant.

8. Procédé selon la revendication 6 ou 7, caractérisé en ce qu'une génératrice tachymétrique (15) entrainée par le moteur (10) fournit le signal de vitesse réelle.

9. Procédé selon l'une quelconque des revendications précédentes, caractérisé en ce qu'on interrompt l'alimentation du moteur lorsque, simultanément, le couple résistant dépasse une valeur limite et le moteur est à l'arrêt.

10. Procédé selon la revendication 1, caractérisé en ce qu'on arrête le moteur (20) d'entrainement du tambour lorsque l'intensité du courant électrique traversant ce dernier, c'est-à-dire le couple résistant s'opposant au moteur, dépasse une valeur limite pendant un temps prohibitif.

11. Procédé selon la revendication 10, caractérisé en ce qu'un condensateur (33) est chargé lorsque l'intensité du courant traversant le moteur (20) dépasse la valeur limite, l'arrêt du moteur étant commandé lorsque cette charge ($V_4$) atteint une autre limite ($V_3$).

12. Procédé selon la revendication 10 ou 11, caractérisé en ce que le moteur est arrêté pendant un temps constant lorsque le couple résistant s'opposant au moteur a atteint la valeur limite pendant un temps prohibitif.

13. Procédé selon les revendications 11 et 12, caractérisé en ce que ledit temps constant d'arrêt du moteur est déterminé par un temps de décharge du condensateur (33) entre la valeur limite ($V_3$) et une valeur seuil ($V_H$).

14. Procédé selon la revendication 1, caractérisé en ce que l'énergie de brassage du linge pouvant prendre deux valeurs, c'est seulement lorsque l'énergie de brassage a la valeur la plus élevée qu'on diminue cette énergie lorsque le couple résistant s'opposant au moteur (20) d'entrainement du tambour dépasse une valeur limite pendant un temps prohibitif.

15. Procédé selon les revendications 12 et 14, caractérisé en ce que le moteur est arrêté, pendant ledit temps constant, au plus une fois lors d'une période comprenant un temps déterminé d'arrêt et un temps déterminé de rotation.

16. Lave-linge pour la mise en oeuvre du procédé selon la revendication 13, caractérisé en ce qu'il comprend un comparateur (36) sur la première entrée (37) duquel est appliqué le signal ($V_3$) représentant la valeur limite de charge du condensateur (33) et dont la seconde entrée (35) reçoit un signal représentant la charge du condensateur (33) et en ce que la sortie (40) de ce comparateur (36) est reliée à la première entrée (37) par une résistance (41).

## Patentansprüche

1. Verfahren zur Minimierung der Auslegung des elektrischen Antriebsmotors der Trommel einer Waschmaschine, dadurch gekennzeichnet, daß man die zum Umwälzen der Wäsche aufgewandte Energie verringert, wenn das dem Motor (10) entgegenwirkende Widerstandsmoment ansteigt.

2. Verfahren nach Anspruch 1, dadurch gekennzeichnet, daß die Umdrehungszahl der Trommel während einer gegebenen Zeit abnimmt, wenn das Widerstandsmoment zunimmt.

3. Verfahren nach Anspruch 2, dadurch gekennzeichnet, daß die Trommel sich während Perioden von gleichbleibender Dauer dreht, die durch Stillstandsperioden getrennt sind, deren Dauer sich im gleichen Sinn wie das Widerstandsmoment verändert.

4. Verfahren nach Anspruch 2, dadurch gekennzeichnet, daß die Trommel sich während Perioden dreht, deren Dauer sich in umgekehrtem Sinn wie die Veränderungen des Widerstandsmoments verändern und die durch Stillstandsperioden von gleichbleibender Dauer getrennt sind.

5. Verfahren nach einem der Ansprüche 2 bis 4, dadurch gekennzeichnet, daß die zum Umwälzen aufgewandte Energie zwei bestimmte Werte annehmen kann, von denen der größere einem unterhalb eines Grenzwertes liegenden Widerstandsmoment und der kleinere einem oberhalb des Grenzwertes liegenden Widerstandsmoment entspricht.

6. Verfahren nach einem der vorangehenden Ansprüche für eine Waschmaschine mit einem Regelkreis (13, 15, 17, 11), der die Umdrehungsgeschwindigkeit des Antriebsmotors (10) der Trommel auf einen von einem Programmsschaltwerk gelieferten Einstellwert regelt, dadurch gekennzeichnet, daß ein in Reihe mit der Stromversorgung (12) des Motors (10) liegender Schalter (11) und eine Steuervorrichtung, welche die Umformung der Werte des Fehlersignals (ε) in Werte der Zeitdauer der Leitung des Schalters (11) im Verlauf einer vorgegebenen Periode ermöglicht, vorgesehen sind und die für das Umwälzen aufgewandte Energie in Abhängigkeit von der Dauer der Leitung des Schalters (11) modifiziert wird.

7. Verfahren nach Anspruch 6, dadurch gekennzeichnet, daß ein Mikroprozessor (13) das Fehlersignal (ε) und die Dauer der Leitung berechnet und die zum Umwälzen augewandte Energie in Abhängigkeit vom Widerstandsmoment modifiziert.

8. Verfahren nach Anspruch 6 oder 7, dadurch gekennzeichnet, daß ein vom Motor (10) angetriebener Tachogenerator (15) das signal der wirklichen Umdrehungsgeschwindigkeit liefert.

9. Verfahren nach einem der vorangehenden Ansprüche, dadurch gekennzeichnet, daß man die Stromversorgung des Motors unterbricht, wenn das Widerstandsmoment einen Grenzwert überschreitet und gleichzeitig der Motor stillsteht.

10. Verfahren nach Anspruch 1, dadurch gekennzeichnet, daß man den Antriebsmotor (20) der Trommel abschaltet, wenn die durch den Motor gehende elektrische Stromstärke, d.h. das dem Motor entgegenwirkende Widerstandsmoment einen Grenzwert während einer zu langen Zeit übersteigt.

11. Verfahren nach Anspruch 10, dadurch gekennzeichnet, daß ein Kondensator (33) geladen wird, wenn die Stärke des durch den Motor (20) gehenden Stroms den Grenzwert übersteigt, wobei der Motor abgeschaltet wird, wenn diese Ladung ($V_4$) einen anderen Grenzwert ($V_3$) erreicht.

12. Verfahren nach Anspruch 10 oder 11, dadurch gekennzeichnet, daß der Motor während einer gleichbleibenden Zeit abgeschaltet wird, wenn das dem Motor entgegenwirkende Widerstandsmoment während einer zu langen Zeit den Grenzwert erreicht hat.

13. Verfahren nach den Ansprüchen 11 und 12, dadurch gekennzeichnet, daß die gleichbleibende Stillstandszeit des Motors bestimmt ist durch einen Entladungszeit des Kondensators (33) zwischen dem Grenzwert ($V_3$) und einem Schwellenwert ($V_H$).

14. Verfahren nach Anspruch 1, dadurch gekennzeichnet, daß, wenn die zum Umwälzen der Wäsche aufgewandte Energie zwei Werte annehmen kann, nur dann, wenn die zum Umwälzen aufgewandte Energie den höheren Wert erreicht, diese Energie verringert wird, wenn das dem Antriebsmotor (30) der Trommel entgegenwirkende Widerstandsmoment einen Grenzwert während einer zu langen Zeit übersteigt.

15. Verfahren nach den Ansprüchen 12 und 14, dadurch gekennzeichnet, daß der Motor während der gleichbleibenden Zeit hochstens einmal wahrend einer Periode abgeschaltet wird, welche eine bestimmte Stillstandszeit und eine bestimmte Umdrehungszeit umfaßt.

16. Waschmaschine zur Durchführung des Verfahrens nach Anspruch 13, dadurch gekennzeichnet, daß sie einen Komparator (36) aufweist, an dessen erstem Eingang (37) das den Grenzwert der Ladung des Kondensators (33) wiedergebende Signal ($V_3$) angelegt wird und dessen zweiter Engang (35) ein Signal empfängt, das die Ladung des Kondensators (33) wiedergibt, und daß der Ausgang (40) dieses Komparators (36) mit dem ersten Eingang (37) über einen Widerstand (42) verbunden ist.

## Claims

1. A method of minimising the dimensioning of the electric drive motor for the drum of a washing machine, characterised in that the energy expended for agitating the linen is decreased when the moment of resistance which acts in opposition to the motor (10) increases.

2. A method as claimed in claim 1, characterised in that the number of revolutions of the drum decreases for a predetermined period of time when the moment of resistance increases.

3. A method as claimed in claim 2, characterised in that the drum rotates during equal-duration periods which are separated by standstill periods the duration of which varies in the same sense as the moment of resistance.

4. A method as claimed in claim 2, characterised in that the drum rotates during periods the duration of which varies in a sense opposite to that of the variations of the moment of resistance, said periods being separated by standstill periods of constant duration.

5. A method as claimed in any of the claims 2 to 4, characterised in that the energy expended for agitation may take two specific values, the higher one of said values corresponding to a moment of resistance below a limit value and the lower one corresponding to a resistance moment above said limit value.

6. A method as claimed in any of the preceding claims for a washing machine comprising a control circuit (13, 15, 17, 11) for controlling the speed of revolution of the drive motor (10) for the drum to a set-point value supplied by a programme switching circuit, characterised in that there are provided a switch (11) connected in series to the power supply (12) of the motor (10) and a control means which permits conversion of the values of the error signal (ε) to values

representative of the duration of the conductivity of the switch (11) in the course of a predetermined period of time, and the energy expended for agitating is modified in response to the duration of the conductivity of the switch (11).

7. A method as claimed in claim 6, characterised in that a microprocessor (13) calculates the error signal ($\varepsilon$) and the duration of conductivity and modifies the energy expended for agitating in response to the moment of resistance.

8. A method as claimed in claim 6 or claim 7, characterised in that a tachogenerator (15) driven by the motor (10) supplies the signal representative of the actual speed of revolution.

9. A method as claimed in any of the preceding claims, characterised in that the power supply of the motor is interrupted when the moment of resistance exceeds a limit value and the motor is simultaneously at a standstill.

10. A method as claimed in claim 1, characterised in that the drive motor (20) of the drum is turned off when the intensity of the electric current passing through the motor, i.e. the moment of resistance which acts in opposition to the motor, exceeds a limit value during an excessively long time.

11. A method as claimed in claim 10, characterised in that a capacitor (10) is charged when the intensity of the current passing through the motor (20) exceeds the limit value, the motor being turned off when said charge ($V_4$) reaches another limit value ($V_3$).

12. A method as claimed in claim 10 or claim 11, characterised in that the motor is turned off during a constant time period when the moment of resistance acting in opposition to the motor has reached the limit value for an excessively long time.

13. A method as claimed in claims 11 and 12, characterised in that the constant standstill period of the motor is determined by a discharge period of the capacitor (33) between the limit value ($V_3$) and a threshold value ($V_H$).

14. A method as claimed in claim 1, characterised in that, when the energy expended for agitating the linen may take two values, this energy is decreased only when the energy expended for agitation reaches the higher value when the moment of resistance acting in opposition to the drive motor (20) for the drum exceeds a limit value for an excessively long time.

15. A method as claimed in claims 12 and 14, characterised in that during the constant period of time the motor is turned off at most once during a period which comprises a predetermined standstill time and a predetermined revolution time.

16. A washing machine for performing the method as claimed in claim 13, characterised in that it comprises a comparator (36) to the first input (37) of which the signal ($V_3$) representative of the limit value for the charge of the capacitor (33) is applied and the second input (35) of which receives a signal representative of the charge of the capacitor (33), and that the output (40) of said comparator (36) is coupled to said first input (37) via a resistor (41).

# FIG_1

# FIG_2

# FIG_3

ACQUISITION $V_R$

CALCUL DE $\varepsilon$

CALCUL DE $\theta$

$\theta < \theta_M$

OUI NON

DIMINUER LES CADENCES

1

0 090 716

# FIG_4

# FIG_5·a

# FIG_5·b S1

# FIG_5·c

# FIG_5·d cons.vitesse

3